# FASCICULE DE BREVET EUROPEEN

(11) **EP 3 606 348 B1**
(45) Date de publication et mention de la délivrance du brevet: **17.03.2021**
(21) Numéro de dépôt: 18715023.0
(22) Date de dépôt: 30.03.2018
(51) Int. Cl.: A21B 5/02, A47J 37/06

(54) **MACHINE MODULAIRE DE CUISSON DE CORNETS ALIMENTAIRES**
MODULARE MASCHINE ZUM KOCHEN VON LEBENSMITTELHÖRNCHEN
MODULAR MACHINE FOR COOKING FOOD CONES

(30) Priorité: 06.04.2017 FR 1753020
(43) Date de publication de la demande: 12.02.2020
(73) Titulaire: Capucins Bras, 12210 Laguiole, Occitanie (FR)
(72) Inventeur: BRAS, André, 12210 Laguiole, Occitanie (FR)
(74) Mandataire: Junca, Eric
(86) Numéro de dépôt international: PCT/EP2018/058361
(87) Numéro de publication internationale: WO 2018/185036

(56) Documents cités:
- FR-A1- 2 953 685
- US-A- 1 341 084
- US-A- 1 379 643
- US-A- 1 476 122

## Description

### DOMAINE TECHNIQUE

L'invention se rapporte à une machine modulaire de cuisson de cornets souples et étanches, à partir d'une pâte alimentaire telle qu'une pâte à crêpe, à galette, à pizza fine, à flammekueche ou équivalente. Les cornets sont ensuite garnis de produits alimentaires chauds (viandes hachées, etc.) ou froids (salades, etc.), pour former directement un produit facile à consommer.

Des machines de cuisson pour réaliser des cornets en pâte alimentaire sont connues. Ces machines comportent une matrice femelle conique dans laquelle la pâte est versée et une matrice mâle ou poinçon, dont la paroi est positionnée dans et à distance déterminée de la paroi parallèle de la matrice femelle. Cette distance correspond sensiblement à l'épaisseur du cornet réalisé après cuisson de la pâte par des éléments chauffants intégrés dans la machine.

Une telle machine est par exemple décrite dans le document de brevet WO 03043425. Des éléments de chauffage sont agencés dans les moules mâle et femelle pour cuire la pâte préchauffée dans un tuyau d'amenée par le fond de la matrice femelle. Une fois cuite, la pâte en forme de godet est soulevée par un portique deux axes avec la matrice mâle puis est transporté au droit d'un récepteur. Le godet est détaché par un courant de gaz qui traverse la matrice mâle constituée d'un matériau perméable aux gaz et est accueilli dans le récepteur.

L'appareil de cuisson de cônes consommables du document de brevet US 5 336 511 comporte également un agencement de cônes de moules femelles qui tournent en carrousel dans un bâti de base entre un poste initial, un poste de chauffage et un poste de cuisson. Au poste de préchauffage, la pâte est versée dans le moule femelle préchauffée à la température de cuisson au poste initial, et un cône de moule mâle préchauffé à une température intermédiaire est abaissé pour former un cône de pâte puis est relevé. Le moule femelle tourne alors jusqu'au poste de cuisson où un autre moule mâle - préchauffé à la température de cuisson - vient procéder à la cuisson du cône de pâte en combinaison avec le moule femelle. Des moyens de chauffage électriques ou à gaz de chauffage des moules sont gérés électriquement à partir d'une console de contrôle.

### ÉTAT DE LA TECHNIQUE

La technologie a évolué afin d'améliorer l'efficacité de telles machines, en simplifiant les structures de mise en place et de retrait des moules mâles ainsi que les structures d'accueil des moules femelles dans le bâti de base.

Par exemple le document de brevet FR 2 953 685, déposé au nom de la demanderesse, décrit une machine de cuisson de cornets de pâte souple dans laquelle des moules mâles et femelles coniques sont montés en alignement dans des blocs: le bloc de moules mâles se déplace en translation au droit des moules femelles pour venir se placer dans les moules femelles, lors de la cuisson de la pâte dans l'interstice des moules, et se retirer avec la pâte après cuisson.

En général les moules des machines connues présentent un revêtement antiadhésif pour enlever la pâte restante et faciliter le nettoyage des moules après cuisson. Cependant, les revêtements s'usent et les moules doivent être périodiquement rechaper. Or ce rechapage nécessite un démontage des moules et les machines actuelles ne sont pas prévues pour faciliter une telle maintenance car ces moules sont solidarisés aux moyens de structure et de chauffage. Le démontage de ces moules nécessite alors des interventions et des mobilisations d'appareil de durées importantes.

### EXPOSÉ DE L'INVENTION

L'invention vise précisément à réduire ces durées d'intervention à un strict minimum en prévoyant un démontage aisé des moules mâles et femelles par rapport à leur support. Pour ce faire, les éléments chauffants sont rendus indépendants des moules. De plus, la maintenance est avantageusement espacée grâce à une courbure particulière de la surface des moules mâles associée à une rainure, facilitant le détachement de la pâte sans intervention d'instrument pouvant attaquer le revêtement.

Plus précisément, la présente invention a pour objet une machine modulaire de cuisson de cornets souples et étanches à partir d'une pâte alimentaire, comportant un bâti de base dans lequel sont disposées des moules femelles coniques d'axes parallèles à un axe vertical en utilisation et un support de moules mâles coniques d'axes parallèles à l'axe vertical en utilisation. Le support est mobile selon l'axe vertical entre une position de cuisson, dans laquelle les moules mâles sont insérés dans les moules femelles avec un interstice prédéterminé, et une position de récupération de cornets dans laquelle les moules mâles sont séparés des moules femelles. Dans cette machine modulaire, les moules femelles sont intégrés dans un châssis métallique posé contre des parois longitudinales également métalliques définissant un espace libre et au moins l'une de ces parois est en contact avec un élément chauffant. De plus, les moules mâles sont couplés au support mobile par des moyens de liaison libérables et présentent chacun un alésage dans lequel s'étend un crayon chauffant.

Selon des modes de réalisation préférés:
- le châssis comportent deux faces principales qui forment une structure longitudinale de coupe en « V » et chaque face principale du châssis est posée contre les faces frontales des parois longitudinales d'accueil formant également une coupe en « V », au moins une face arrière des parois d'accueil étant alors en contact direct contre une face d'un élément chauffant fixé de manière démontable sur cette face arrière;
- le châssis présentant des faces transversales perpendiculaires aux faces principales, un moyen d'accrochage est fixé sur chaque face transversale, chaque moyen d'accrochage étant destinée à être couplée de manière amovible à une poignée de soulèvement du châssis pour son extraction du bâti de base;
- les parois longitudinales d'accueil sont fixées de manière libérable dans un compartiment libre du bâti de base pour leur extraction;
- les moules, le châssis et les parois de l'évidement sont en alliage d'aluminium;
- chaque moule mâle est couplé au support par des moyens libérables choisis parmi des joints à baïonnette, des moyens de clipsage et des vis à pointeau;
- le crayon chauffant de chaque moule mâle est fixé dans un cône interne lui-même fixé au support et, l'alésage du moule mâle étant conique, le moule mâle s'emboite sur le cône interne et est fixé sur cône par les moyens libérables;
- au moins une sonde de température est plongée dans des logements formés dans au moins un moule mâle et dans au moins une paroi de l'évidement du bâti, ces sondes étant reliées à une unité de traitement de données et de commande des éléments et crayons chauffants en liaison avec un panneau de réglage des paramètres de cuisson en durée et en température;
- le support des moules mâles présente une forme de potence comportant une embase qui portent les moules mâles, cette embase étant couplée à un coulisseau de réglage du support en hauteur;
- la potence est réglée automatiquement en position basse des moules mâles par une butée ajustable en hauteur correspondant à l'interstice souhaité entre les moules mâles et femelles;
- le coulisseau est déplaçable, avant et après une durée de blocage de la butée, entre des positions haute et basse par action sur une poignée solidarisée à l'embase combinée à un amortisseur de déplacement longitudinal agencé dans le coulisseau;
- en position basse de la potence, la butée est maintenue par des moyens de blocage actifs pendant un temps de cuisson déclenché par un capteur de présence et de durée définie par l'unité de traitement et de commande en fonction des paramètres de cuisson;
- les moules mâles et femelles ont une section de forme courbe intégrant au moins une variation de courbure et chaque moule mâle présente au moins une rainure s'étendant dans un plan de coupe, la rainure ayant au moins une zone d'interruption dans une zone de courbure maximale;
- la forme courbe de section des moules mâles et femelles est choisie entre une forme ovoïde, oblongue et elliptique;
- les rainures sont situées sensiblement dans une partie médiane des moules mâles, et le plan de coupe dans lequel elles s'étendent est orienté de préférence perpendiculairement à l'axe de ces moules.

Dans le présent texte, le qualificatif « vertical » se rapporte à la direction d'un axe parallèle aux forces de gravitation localisées sur le site de la machine de cuisson, la machine de cuisson étant supposée positionnée sur un sol horizontal perpendiculairement aux forces de gravitation. De plus, « longitudinal » se rapporte à l'extension principale d'un élément selon une dimension linéaire, et « transversal » désigne une direction perpendiculaire à l'extension longitudinale.

### PRÉSENTATION DES FIGURES

D'autres données, caractéristiques et avantages de la présente invention apparaîtront à la lecture de la description non limitée qui suit, en référence aux figures annexées qui représentent, respectivement :
- la figure 1a, une vue globale, en perspective, d'un exemple de machine modulaire de cuisson selon l'invention ;
- la figure 1b, une vue en coupe transversale du bâti de base de la machine modulaire selon le plan TT de la figure 1a, illustrant des moyens de déclenchement de la cuisson et de blocage pendant la durée de cuisson;
- les figures 2a et 2b, des vues plongeantes globale et partielle de la face supérieure du bâti de base de la machine modulaire de cuisson selon la figure 1, avec les poignées de soulèvement du châssis des moules femelles posées sur cette face supérieure (figure 2a) et une poignée de soulèvement en mode d'extraction du châssis (figure 2b);
- la figure 2c, un vue en coupe transversale partielle du bâti de base avant l'extraction du châssis;
- la figure 3, une vue supérieure du châssis des moules femelles;
- les figures 4a et 4b, des vues en coupe (figures 3a) et en perspective partielle (figure 3b) des moules mâles et de leur support mobile;
- la figure 4c, une vue en coupe d'un moule mâle enrobé de la pâte cuite, et
- la figure 5, une vue en perspective d'un exemple de cornet de pâte obtenu par la machine modulaire selon l'invention.

### DESCRIPTION DÉTAILLÉE

Dans la description ci-dessous, des signes de référence identiques se rapportent à un même élément et renvoient au(x) passage(s) du texte qui le décrive(nt).

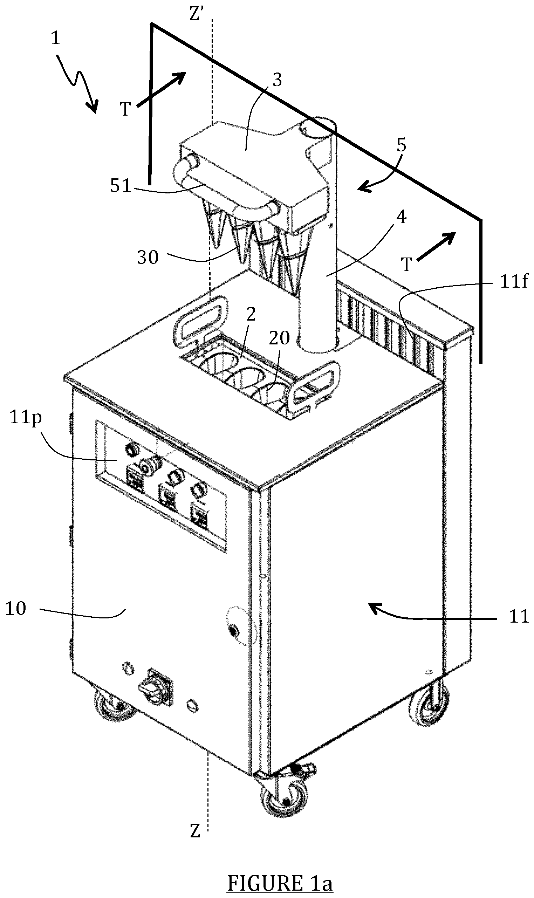

Un exemple de machine modulaire de cuisson selon l'invention est illustré sur la vue en perspective de la figure 1a. Cette machine modulaire 1 comporte un bâti de base 11, dans lequel est posé un châssis 2 de moules femelles coniques 20 d'axes parallèles à l'axe vertical Z'Z en mode utilisation, et un support en forme de potence 5 sur laquelle sont fixés des moules mâles coniques 30 d'axes parallèles à l'axe vertical Z'Z en mode utilisation. Les moules mâles 30, encore appelés « poinçons », sont portés par une embase 3 montée sur un coulisseau 4 mobile selon un axe parallèle à l'axe Z'Z, pour former une potence 5. Une poignée 51 est fixée sur l'embase pour régler manuellement la hauteur du coulisseau 4 et donc des moules mâles 30 en fonction des paramètres de cuisson.

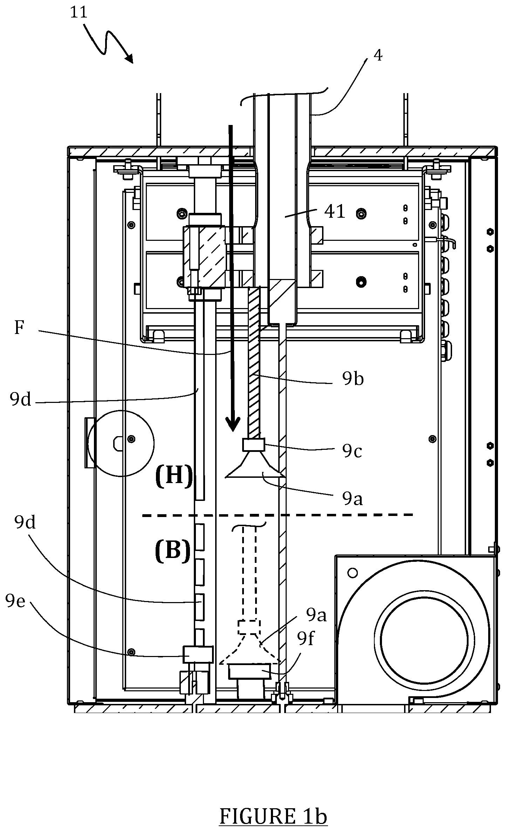

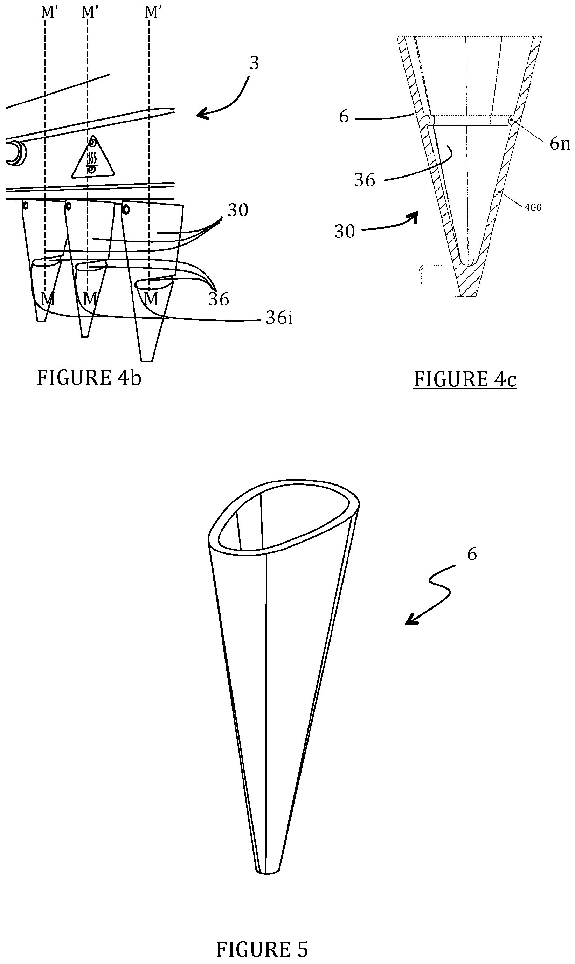

**Le** coulisseau 4 est mobile entre une position basse « B » de cuisson (cf. figure 1b), dans laquelle les moules mâles 30 sont insérés dans les moules femelles 20, dénommées également « matrices », avec un interstice correspondant à l'épaisseur de pâte prédéterminée - la pâte étant préalablement versée dans les moules femelles 20 - et une position haute « H » (cf. figure 1b) de récupération de cornets de pâte 6 une fois cuite (cf. figure 4c), dans laquelle les moules mâles 30 sont totalement séparés des moules femelles 20.

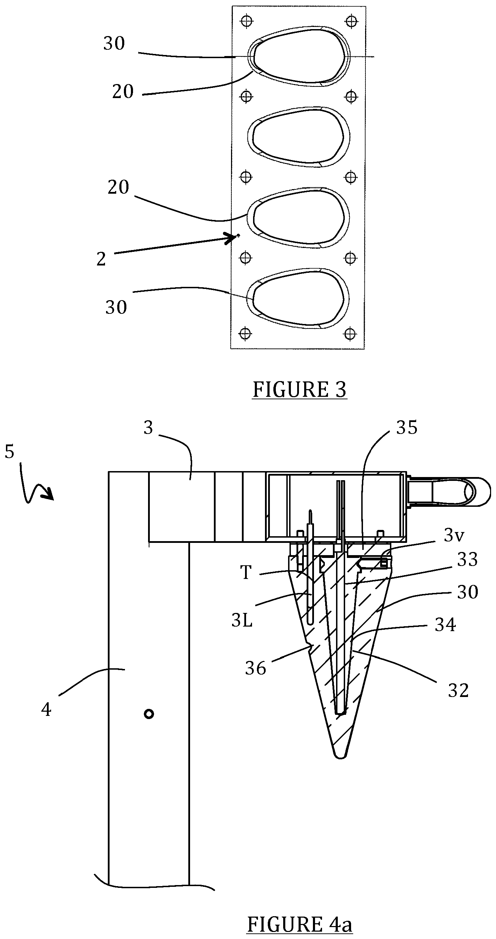

Les moules femelles 20 sont intégrés dans un châssis métallique 2, de préférence en aluminium ou alliage d'aluminium, et les moules métalliques mâles 30, également de préférence en aluminium ou alliage d'aluminium, sont couplés à l'embase 3 par des moyens libérables (cf. figure 4a). La capacité d'extraction directe du châssis 2 des moules femelles 20 et de libération directe des moules mâles 30 illustrent le caractère modulable de la machine 1 selon l'invention.

Le bâti de base 11 comporte également un panneau 11p de réglage des paramètres de cuisson en durée et en température sur la porte d'accès 10, et des filtres démontables en acier inoxydable 11f. En liaison avec le panneau de réglage 11p, la porte 10 intègre sur sa paroi interne (non représentée) un panneau de fusibles et une unité de traitement des données fournies par le panneau de réglage 11p.

La vue en coupe transversale du bâti de base 11 de la figure 1b selon le plan TT de la figure 1a, illustre des moyens de déclenchement de la cuisson et de blocage des moules mâles pendant la durée de cuisson.

Le coulisseau 4 est amorti dans son déplacement entre des positions haute « H » et basse « B » par un vérin à gaz 41 s'étendant longitudinalement dans le coulisseau 4. Ce coulisseau 4 est alors réglé automatiquement en position basse « B » - correspondant à la position basse des moules mâles 30 (cf. figure 1a) - par une rondelle 9a servant de butée et montée solidaire du coulisseau 4 sur une tige filetée 9b. La rondelle 9a est ajustée en hauteur sur la tige filetée 9b et bloquée par un contre-écrou 9c. Cet ajustement de hauteur fixe l'épaisseur d'interstice souhaitée entre les moules mâles 30 et femelles 20 (cf. figure 1a) lorsque débutera la cuisson.

Lorsque l'opérateur descend le coulisseau 4 (flèche F), par l'application d'une force sur la poignée 51 (cf. figure 1a), une lame métallique 9d solidaire du coulisseau 4 et la rondelle 9a descendent également (flèche F). La lame métallique 9d (en traits pointillés) arrive dans le champ de détection d'un capteur de présence 9e.

Le capteur 9e déclenche alors, suite à la détection de la lame 9d (qui sert ici de marqueur de présence de la rondelle de butée 9a), une minuterie de cuisson définie par l'unité de traitement et de commande en fonction des paramètres de cuisson. Le capteur de présence 9e déclenche également une électro-magnétisation - via l'unité de traitement de données et de commande - d'une ventouse 9f agencée au droit de la rondelle 9a.

Ainsi, lorsque le coulisseau 4 atteint sa position basse « B », la rondelle 9a (en traits pointillés) vient se positionner contre la ventouse 9f et est bloquée sur cette ventouse 9f tant que le champ magnétique est présent. La rondelle 9a reste alors bloquée contre la ventouse 9f pendant toute la durée de la cuisson.

**A** la fin de la cuisson, le capteur 9e - piloté par l'unité de traitement et de commande - désactive la ventouse 9f et la libération de la rondelle 9a permet la remontée du coulisseau 4 via le vérin à gaz 41 et l'application d'une force ascensionnelle appliquée sur la poignée 51 (cf. figure 1a) jusqu'à sa position haute « H ».

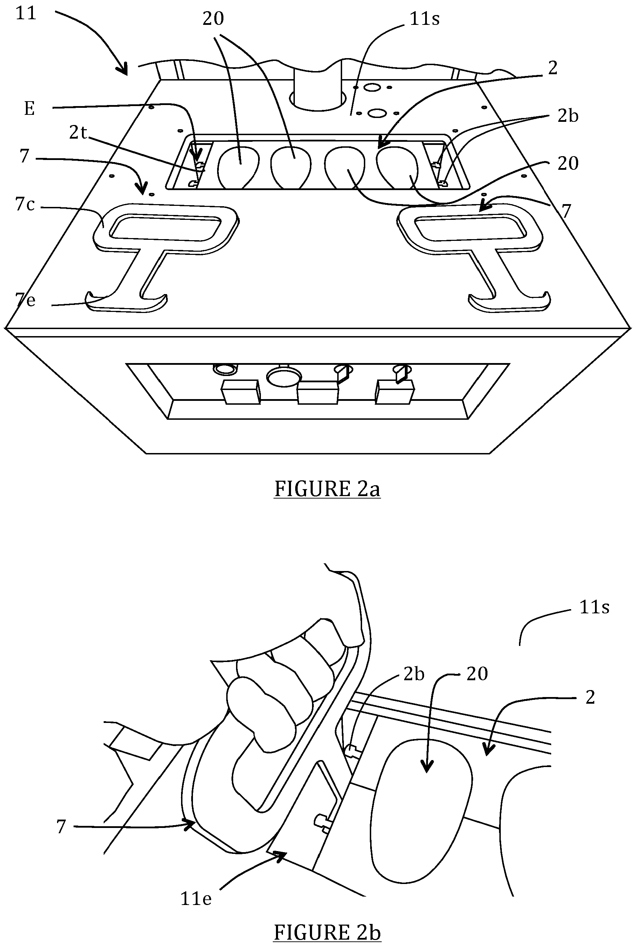

En référence à la vue plongeante de la figure 2a, deux poignées indépendantes de soulèvement 7 du châssis 2 sont posées sur la face supérieure 11s du bâti de base 11. Chaque poignée 7 présente avantageusement une forme plate et comporte une crosse de préhension 7c prolongée par deux étriers opposés 7e. Cette figure 2a illustre la pose du châssis 2 à moules femelles 20 dans un espace d'accueil « E ». Les poignées 7 seront insérées dans l'espace « E » et accrochées par les boulons 2b fixés sur les faces transversales 2t du châssis 2.

Comme cela apparaît sur la vue partielle de la face supérieure 11s de la figure 2b, la forme plate de chaque poignée 7 permet de l'insérer aisément entre chaque face transversale 2t du châssis 2 et l'espace d'accueil « E » formé dans le bâti 11 et dans lequel le châssis 2 est posé. Ainsi, en mode d'extraction du châssis 2, chaque étrier 7e de chaque poignée 7 est glissé sous un boulon d'accrochage 2b fixé sur chaque face transversale 2t du châssis 2. Le fait que le châssis 2 soit simplement posé dans l'espace « E » permet de sortir aisément ce châssis pour la maintenance du revêtement PTFE (polytétrafluoroéthylène) des moules femelles 20.

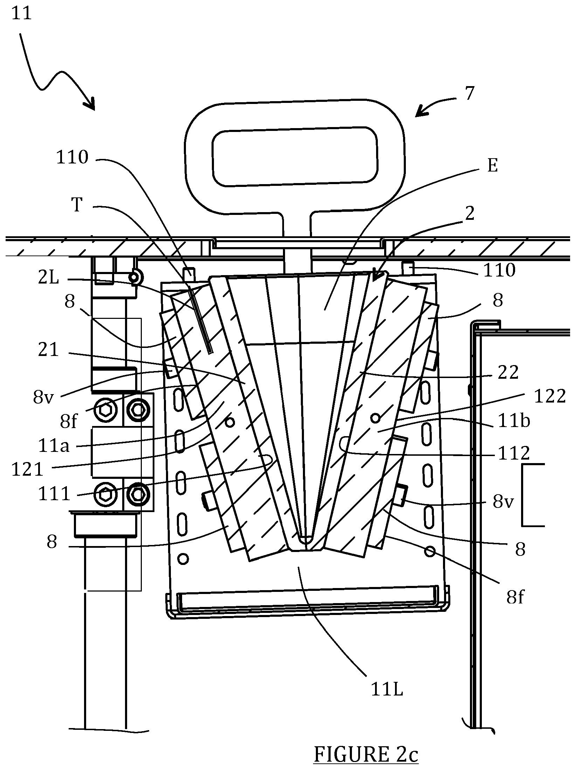

La vue en coupe transversale partielle du bâti de base 11 montre plus précisément, sur la figure 2c, la position du châssis 2 dans l'espace d'accueil « E » avant son extraction. Le châssis 2 présente deux faces principales 21, 22 formant une structure longitudinale en « V » en coupe transversale. Ces faces principales 21, 22 sont posées contre les faces frontales 111 et 112 de parois longitudinales 11a et 11b qui limitent l'espace d'accueil « E » du châssis 2 dans un compartiment libre 11L. Le fait que le châssis 2 et l'espace d'accueil « E » sont de structure en « V » permet d'obtenir directement un contact sûr entre les parois 11a, 11b et 21, 22 de ces structures.

Les parois d'accueil 11a et 11b forment également une structure en « V » en coupe transversale et sont constituées en matériau bon conducteur de la chaleur, de préférence en aluminium ou alliage d'aluminium. Une sonde de température « T » est avantageusement intégrée dans un logement 2L l'une des parois de l'espace d'accueil « E », la paroi 11a dans l'exemple.

Les faces arrière 121, 122 des parois longitudinales 11a, 11b sont en contact direct contre une face 8f d'éléments chauffants 8 fixés par des vis 8v sur ces faces arrière 121, 122. De plus, ces parois longitudinales 11a, 11b sont montées de manière indépendante et libérable dans le bâti 11 par des boulons 110 pour faciliter leur extraction. La maintenance des parois d'accueil 11a, 11b et des éléments chauffants 8 est ainsi facilitée.

Sur la vue supérieure de la figure 3, il apparaît plus précisément que les moules femelles 20 du châssis 2 et les moules mâles 30 qui viennent s'insérer dans les moules femelles 20 ont des formes coniques à base ovoïde. Cette forme est particulièrement avantageuse pour faciliter la récupération des cornets de pâte cuite 6 sur les moules mâles 30 (cf. figure 4c).

La vue en coupe d'un moule mâle 30 clipsé sur l'embase 3 (figure 4a) montre que chaque moule mâle 30 présente un alésage 32 dans lequel s'étend un crayon chauffant 33 traversant l'embase 3 et une rainure 36 dont la fonction est décrite ci-après. Avantageusement, le crayon chauffant 33 est fixé dans un cône interne 34 lui-même fixé sur l'embase 3 via un socle 35. Le moule mâle 30 vient alors s'emboiter sur le cône interne 34 par une vis pointeau 3v aisément libérable. L'alésage 32 du moule mâle 30 est conique pour s'emboiter sur le cône 34. Une sonde de température « T » est également plongée dans un logement 3L du moule mâle 30, proche et parallèle à l'alésage 32 du crayon chauffant 33 dans l'exemple de réalisation. Cette sonde « T » est fixée sur l'embase 3.

Egalement en référence à la vue en perspective partielle de l'embase 3 et des moules mâles 30 de la figure 4b, ces moules 30 présentent, en surface, la rainure 36 s'étendant dans un plan de coupe orienté perpendiculairement à l'axe M'M des moules 30. La rainure 36, qui se situe dans une partie médiane de chaque moule 30, est interrompue dans des zones 36i de courbure maximale de la rainure 36 de forme ovoïde dans l'exemple. Dans ces zone 36i, la rainure 36 disparaît et la surface des moules 30 redevient continue. Comme illustré par la vue coupe de la figure 4c, cette rainure 36 permet de détacher aisément la pâte 6 qui, une fois cuite, enrobe chaque moule mâle 30 remonté par action sur l'arbre mobile 4 (cf. figure 4a). La pâte 6 forme alors une nervure 6n dans la rainure 36.

En appliquant un couple de force sur la pâte cuite 6, la nervure de pâte 6n entraînée en rotation sort de la rainure 36 sans rester attacher à la surface du moule 30 du fait de la rupture de courbure dans la zone 36i. Cette facilité de séparation de la pâte cuite 6 permet de ne pas utiliser d'instrument pour la détacher, et permet donc d'espacer le rechapage du revêtement des moules 30 en PTFE. Une vue en perspective d'un exemple de cornet de pâte 6, obtenu après séparation de son moule mâle par la machine selon l'invention, est illustrée sur la figure 5. Ce cornet 6 est souple et étanche après cuisson.

En fonctionnement, la cuisson débute par la mise sous tension, via un circuit électrique approprié (non représenté), des éléments de chauffage 8 (cf. figure 2c) de la pâte versée dans les moules femelles 20 et des crayons chauffants 33 des moules mâles 20 insérés dans les moules femelles par abaissement de la potence 5 (cf. figure 4a). L'unité de traitement et de commande déclenche la cuisson par cette mise sous tension en fonction des paramètres de température et de durée préalablement réglés sur le panneau 11p (cf. figure 1) et des sondes de température intégrées aux moules 20 et aux parois 11a ou 11b. Une fois la durée de cuisson terminée, la potence 5 est relevée et les cornets de pâte 6 sont détachés.

L'invention n'est pas limitée aux exemples de réalisation décrits et représentés. Ainsi, la minuterie de la cuisson peut être déclenchée par tout moyen métallique en liaison avec l'approche de la position basse du coulisseau, par exemple la rondelle de blocage.

La butée peut être ajustée en hauteur par tout moyen de verrouillage, de clipsage, de crochetage ou de serrage réversible.

Par ailleurs, les moules coniques mâles et femelles peuvent présenter tout type de section courbe intégrant au moins une variation de courbure, par exemple une section oblongue ou elliptique.

Alternativement au vérin à gaz, tout type d'amortisseur apte à freiner la descente des poinçons et à les remonter en souplesse peut être utilisé, notamment un vérin électrique, un amortisseur à ressort ou un contrepoids.

Les moyens de blocage de la rondelle de butée peuvent être, outre la ventouse magnétisable, un loquet de verrouillage / déverrouillage à commande électrique ou une trappe à fermeture / ouverture programmables par l'unité de traitement et de commande.

De plus, le contact entre les éléments chauffants et les parois de l'espace d'accueil peut être réalisée par des zones élémentaires, par des surfaces multiples ou sur toute la face de contact de ces éléments chauffants. Les parois longitudinales de l'espace d'accueil et les parois principales du châssis peuvent être verticales dans un autre mode de réalisation en combinaison avec un mécanisme de poussée horizontale de mise en contact de ces parois.

En outre, le plan de section dans lequel s'étendent les rainures des moules mâles peut être incliné par rapport à l'axe de ces moules mâles.

## Revendications

1. Machine modulaire (1) de cuisson de cornets souples et étanches (6) à partir d'une pâte alimentaire, comportant un bâti de base (11) dans lequel sont disposées des moules femelles coniques (20) d'axes parallèles à un axe vertical (Z'Z) en utilisation et un support (5) de moules mâles coniques (30) d'axes parallèles à l'axe vertical (Z'Z) en utilisation, ce support (5) étant mobile selon l'axe vertical (Z'Z) entre une position de cuisson, dans laquelle les moules mâles (30) sont insérés dans les moules femelles (20) avec un interstice prédéterminé, et une position de récupération de cornets (6) dans laquelle les moules mâles (30) sont séparés des moules femelles (20), la machine modulaire (1) est **caractérisée en ce que** les moules femelles (20) sont intégrés dans un châssis métallique (2) posé contre des parois longitudinales d'accueil (11a, 11b) également métalliques définissant un espace libre (E) et au moins l'une de ces parois (11a, 11b) est en contact avec un élément chauffant (8), et **en ce que** les moules mâles (30), présentant chacun un alésage (32) dans lequel s'étend un crayon chauffant (33), sont couplés au support mobile (5) par des moyens de liaison libérables (8v).

2. Machine modulaire selon la revendication 1, dans laquelle le châssis (2) comportent deux faces principales (21, 22) formant une structure longitudinale de coupe en « V » posée contre les faces frontales (111, 112) des parois longitudinales d'accueil (11a, 11b) formant également une coupe en « V », et dans laquelle au moins une face arrière (121, 122) des parois d'accueil (11a, 11b) est en contact direct contre une face (8f) d'un élément chauffant (8) fixé de manière démontable sur cette face arrière (121, 122).

3. Machine modulaire selon l'une quelconque des revendications 1 ou 2, dans laquelle le châssis (2) présentant des faces transversales (2t) perpendiculaires aux faces principales (21, 22), un moyen d'accrochage (2b) est fixé sur chaque face transversale (2t), chaque moyen d'accrochage (2t) étant destinée à être couplée de manière amovible à une poignée de soulèvement (7) du châssis (2) pour son extraction du bâti de base (11).

4. Machine modulaire selon l'une quelconque des revendications précédentes, dans laquelle les parois longitudinales d'accueil (11a, 11b) sont fixées de manière libérable dans un compartiment libre (11L) du bâti de base (11) pour leur extraction.

5. Machine modulaire selon l'une quelconque des revendications précédentes, dans laquelle les moules (20, 30), le châssis (2) et les parois d'accueil (11a, 11b) sont en alliage d'aluminium.

6. Machine modulaire selon l'une quelconque des revendications précédentes, dans laquelle chaque moule mâle (30) est couplé au support (5) par des moyens libérables choisis parmi des joints à baïonnette, des moyens de clipsage et des vis à pointeau (3v).

7. Machine modulaire selon l'une quelconque des revendications précédentes, dans laquelle le crayon chauffant (33) de chaque moule mâle (30) est fixé dans un cône interne (34) lui-même fixé au support (5) et, l'alésage (32) du moule mâle (30) étant conique, le moule mâle (30) s'emboite sur le cône interne (34), et est fixé sur ce cône (34) par les moyens libérables (3v).

8. Machine modulaire selon l'une quelconque des revendications précédentes, dans laquelle au moins une sonde de température (T) est plongée dans des logements (3L, 2L) formés dans au moins un moule mâle (30) et dans au moins une paroi d'accueil (11a, 11b), ces sondes (T) étant reliées à une unité de traitement de données et de commande des éléments (8) et crayons (33) chauffants en liaison avec un panneau de réglage (11p) des paramètres de cuisson en durée et en température.

9. Machine modulaire selon l'une quelconque des revendications précédentes, dans laquelle le support (5) des moules mâles (30) présente une forme de potence comportant une embase (3) qui portent les moules mâles (30), cette embase (3) étant couplée à un coulisseau (4) de réglage du support (5) en hauteur.

10. Machine modulaire selon la revendication précédente, dans laquelle la potence (5) est réglée automatiquement en position basse des moules mâles (30) par une butée (9a) ajustable en hauteur correspondant à l'interstice souhaité entre les moules mâles (30) et femelles (20).

11. Machine modulaire selon la revendication précédente, dans laquelle le coulisseau (4) est déplaçable (F), avant et après une durée de blocage de la butée (9a), entre des positions haute (H) et basse (B) par action sur une poignée (51) solidarisée à l'embase (3) combinée à un amortisseur de déplacement longitudinal (41) agencé dans le coulisseau (4).

12. Machine modulaire selon la revendication précédente, dans laquelle l'amortisseur de déplacement longitudinal est choisi entre un vérin à gaz (41), un vérin électrique, un amortisseur à ressort et un contrepoids.

13. Machine modulaire selon la revendication précédente dans laquelle, en position basse de la potence (5), la butée (9a) est maintenue par des moyens de blocage (9f) actifs pendant un temps de cuisson déclenché par un capteur de présence (9e) et de durée définie par l'unité de traitement et de commande en fonction des paramètres de cuisson.

14. Machine modulaire selon la revendication précédente, dans laquelle les moyens de blocage sont choisis entre une ventouse magnétiquement excitable (9f), un loquet de verrouillage / déverrouillage à commande électrique et une trappe à fermeture / ouverture programmables.

15. Machine modulaire selon l'une quelconque des revendications précédentes, dans laquelle les moules mâles (30) et femelles (20) ont une section de forme de forme courbe intégrant au moins une variation de courbure et chaque moule mâle (30) présente au moins une rainure (36) s'étendant dans un plan de coupe, la rainure (36) ayant au moins une zone d'interruption (36i) dans une zone de courbure maximale.

16. Machine modulaire selon la revendication précédente, dans laquelle la forme courbe de section des moules mâles et femelles est choisie entre une forme ovoïde, oblongue et elliptique.

17. Machine modulaire selon la revendication 15, dans laquelle les rainures (36) sont situées sensiblement dans une partie médiane des moules mâles (30), et s'étendent dans un plan de coupe orienté de préférence perpendiculairement à l'axe (M'M) de ces moules (30).

## Patentansprüche

1. Modulare Maschine (1) zum Backen von weichen und dichten Lebensmittelhörnchen (6) aus einem Teigwarenprodukt, umfassend einen Basisrahmen (11), in dem konische Matrizenformen (20) mit Achsen, die im Gebrauch parallel zu einer vertikalen Achse (Z'Z) verlaufen, und einen Träger (5) von konischen Patrizenformen (30) mit Achsen, die im Gebrach parallel zu der vertikalen Achse (Z'Z) verlaufen, wobei dieser Träger (5) entlang der vertikalen Achse (Z'Z) zwischen einer Backposition, in der die Patrizenformen (30) mit einem vorbestimmten Zwischenraum in den Matrizenformen (20) eingeführt sind, und einer Position zur Rückgewinnung der Hörnchen (6), in der die Patrizenformen (30) von den Matrizenformen (20) getrennt sind, beweglich ist, wobei die modulare Maschine (1) **dadurch gekennzeichnet ist, dass** die Matrizenformen (20) in einem Metallgestell (2) integriert sind, das an longitudinalen Aufnahmewänden (11a, 11b), die ebenfalls aus Metall sind und einen freien Raum (E) definieren, positioniert ist, und mindestens eine dieser Wände (11a, 11b) mit einem Heizelement (8) in Kontakt ist, und dass die Patrizenformen (30), die jeweils eine Bohrung (32) aufweisen, in die sich ein Heizstift (33) erstreckt, durch freigebbare Verbindungsmittel (8v) mit dem beweglichen Träger (5) gekoppelt sind.

2. Modulare Maschine nach Anspruch 1, wobei das Gestell (2) zwei Hauptflächen (21, 22) aufweist, die eine längliche Struktur mit einem V-förmigen Querschnitt bilden, die an den vorderen Flächen (111, 112) der longitudinalen Aufnahmewände (11a, 11b) positioniert sind, die ebenfalls einen V-förmigen Querschnitt bilden, und wobei mindestens eine hintere Fläche (121, 122) der Aufnahmewände (11a, 11b) mit einer Fläche (8f) eines Heizelements (8), das lösbar an dieser hinteren Fläche (121, 122) fixiert ist, in direktem Kontakt ist.

3. Modulare Maschine nach einem der Ansprüche 1 oder 2, wobei das Gestell (2) Querflächen (2t) aufweist, die senkrecht zu den Hauptflächen (21, 22) verlaufen, ein Befestigungsmittel (2b) an jeder Querfläche (2t) fixiert ist, jedes Befestigungsmittel (2t) dazu bestimmt ist, lösbar mit einem Hebegriff (7) des Gestells (2) für sein Herausziehen aus dem Basisrahmen (11) gekoppelt zu werden.

4. Modulare Maschine nach einem der vorhergehenden Ansprüche, wobei die longitudinalen Aufnahmewände (11a, 11b) freigebbar in einem freien Raum (11L) des Basisrahmens (11) für ihr Herausziehen fixiert sind.

5. Modulare Maschine nach einem der vorhergehenden Ansprüche, wobei die Formen (20, 30) des Gestells (2) und die Aufnahmewände (11a, 11b) aus einer Aluminiumlegierung bestehen.

6. Modulare Maschine nach einem der vorhergehenden Ansprüche, wobei jede Patrizenform (30) durch freigebbare Mittel, die unter Bajonettverbindungen, Verrastmitteln und Stellschrauben (3v) ausgewählt sind, mit dem Träger (5) gekoppelt ist.

7. Modulare Maschine nach einem der vorhergehenden Ansprüche, wobei der Heizstift (33) jeder Patrizenform (30) in einem inneren Kegel (34) fixiert ist, der wiederum an dem Träger (5) fixiert ist, und die Bohrung (32) der Patrizenform (30) konisch ist, die Patrizenform (30) auf den inneren Kegel (34) aufschiebbar ist und durch die freigebbaren Mittel (3v) an diesem Kegel (34) fixiert wird.

8. Modulare Maschine nach einem der vorhergehenden Ansprüche, wobei mindestens ein Temperaturfühler (T) in die in mindestens einer Patrizenform (30) und in mindestens einer Aufnahmewand (11a, 11b) ausgebildeten Aufnahmen (3L, 2L) eingetaucht ist, wobei diese Fühler (T) mit einer Einheit zur Datenverarbeitung und zur Steuerung der Heizelemente (8) und -stifte (33) in Verbindung mit einem Feld (11p) zur Einstellung der Backparameter hinsichtlich Dauer und Temperatur verbunden sind.

9. Modulare Maschine nach einem der vorhergehenden Ansprüche, wobei der Träger (5) der Patrizenformen (30) eine Galgenform aufweist, die eine Basis (3) umfasst, welche die Patrizenformen (30) trägt, wobei diese Basis (3) mit einem Schieber (4) zur Einstellung der Höhe des Trägers (5) gekoppelt ist.

10. Modulare Maschine nach dem vorhergehenden Anspruch, wobei der Galgen (5) in der unteren Position der Patrizenformen (30) durch einen höhenverstellbaren Anschlag (9a) entsprechend dem gewünschten Zwischenraum zwischen den Patrizenformen (30) und den Matrizenformen (20) automatisch eingestellt wird.

11. Modulare Maschine nach einem der vorhergehenden Ansprüche, wobei der Schieber (4) vor und nach einer Blockierungsdauer des Anschlags (9a) durch Einwirken auf einen fest mit der Basis (3) verbundenen Griff (51) in Verbindung mit einem in dem Schieber (4) angeordneten Längsverschiebungsdämpfer (41) zwischen einer oberen (H) und einer unteren (B) Position verschiebbar (F) ist.

12. Modulare Maschine nach dem vorhergehenden Anspruch, wobei der Längsverschiebungsdämpfer zwischen einem Gaszylinder (41), einem Elektrozylinder, einem Federdämpfer und einem Gegengewicht ausgewählt ist.

13. Modulare Maschine nach dem vorhergehenden Anspruch, wobei der Anschlag (9a) in der unteren Position des Galgens (5) durch aktive Blockiermittel (9f) während einer Backzeit, die durch einen Anwesenheitssensor (9e) gestartet wird, und über eine durch die Verarbeitungs- und Steuereinheit in Abhängigkeit von den Backparametern definierte Dauer gehalten wird.

14. Modulare Maschine nach dem vorhergehenden Anspruch, wobei die Blockiermittel zwischen einem magnetisch erregbaren Saugnapf (9f), einer elektrisch gesteuerten Ver-/Entriegelungsklinke und einer programmierbaren Verschluss-/Öffnungsklappe ausgewählt sind.

15. Modulare Maschine nach einem der vorhergehenden Ansprüche, wobei die Patrizenformen (30) und die Matrizenformen (20) einen gekrümmten Querschnitt haben, der mindestens eine Krümmungsänderung enthält, und jede Patrizenform (30) mindestens eine Nut (36) aufweist, die sich in einer Schnittebene erstreckt, wobei die Nut (36) mindestens einen Unterbrechungsbereich (36i) in einem Bereich mit maximaler Krümmung aufweist.

16. Modulare Maschine nach dem vorhergehenden Anspruch, wobei die gekrümmte Querschnittsform der Patrizen- und Matrizenformen zwischen einer ovalen, länglichen und elliptischen Form ausgewählt ist.

17. Modulare Maschine nach Anspruch 15, wobei sich die Nuten (36) im Wesentlichen in einem mittleren Teil der Patrizenformen (30) befinden und sich in einer vorzugsweise senkrecht zur Achse (M'M) dieser Formen (30) ausgerichteten Schnittebene erstrecken.

## Claims

1. A modular machine (1) for baking flexible and leak-proof cones (6) from batter, comprising a base frame (11) on which are arranged conical female moulds (20) with their axis parallel to a vertical axis (Z'Z) when in use and a support (5) for conical male moulds (30) with their axis parallel to the vertical axis (Z'Z) when in use, this support (5) being mobile along the vertical axis (Z'Z) between a cooking position, in which the male moulds (30) are inserted into the female moulds (20) with a predetermined gap, and a cone retrieval position (6) in which the male moulds (30) are separated from the female moulds (20), the modular machine (1) is **characterized in that** the female moulds (20) are integrated in a metal frame (2) placed against metal longitudinal receiving panels (11a, 11b) defining a free space (E) and at least one of these receiving panels (11a, 11b) is in contact with a heating element (8), and **in that** the male moulds (30), each having a heating rod (33) extending in a bore (32), are coupled to the mobile support (5) by releasable connectors (8v).

2. A modular machine as claimed in claim 1, in which the frame (2) comprises two main surfaces (21, 22) forming a longitudinal structure with a "V" cross-section placed against the front surfaces (111, 112) of the longitudinal receiving panels (11a, 11b) also forming a "V" section, and in which at least one rear surface (121, 122) of the receiving panels (11a, 11b) is in direct contact with a surface (8f) of a heating component (8) detachable from this rear surface (121, 122).

3. A modular machine as claimed in claim 1 or claim 2, in which the frame (2) having transverse surfaces (2t) perpendicular to the main surfaces (21, 22), a hooking mechanism (2b) is fixed on each transverse surface (2t), each hooking mechanism (2t) being intended to be removably coupled to a lifting handle (7) of the frame (2) for its extraction from the base frame (11).

4. A modular machine according to any of the preceding claims, in which the longitudinal receiving panels (11a, 11b) are releasably fixed in a free compartment (11L) of the base frame (11) for their extraction.

5. A modular machine according to any of the preceding claims, in which the moulds (20, 30), the frame (2) and the receiving panels (11a, 11b) are made of aluminium alloy.

6. A modular machine according to any of the preceding claims, in which each male mould (30) is coupled to the support (5) by releasable means chosen from bayonet joints, clipping means and needle screws (3v).

7. A modular machine according to any of the preceding claims, in which the heating rod (33) of each male mould (30) is fixed into an internal cone (34) itself attached to the support (5) and, the bore (32) of the male mould (30) being conical, the male mould (30) is fitted and fixed on this cone (34) by the releasable means (3v).

8. A modular machine according to any of the preceding claims, in which at least one temperature probe (T) is immersed in housings (3L, 2L) formed in at least one male mould (30) and in at least one receiving panel (11a, 11b), these probes (T) being connected to a data processing and control unit for the heating elements (8) and heating rods (33) and linked to a control panel (11p) setting the parameters for the cooking time and temperature.

9. A modular machine according to any of the preceding claims, in which the support (5) of the male moulds (30) presents an inverted-L shape comprising a base (3) which carries the male moulds (30), this base (3) being coupled to a slide (4) for adjusting the height of the support (5).

10. A modular machine according to the previous claim, in which the support (5) is automatically adjusted in the lower position of the male moulds (30) by a stop (9a) adjustable in height corresponding to the desired gap between the male moulds (30) and female moulds (20).

11. A modular machine according to the preceding claim, in which the slide (4) is movable (F), before and after a period of blocking the stop (9a), between a high (H) and a low (B) positions by operating a handle (51) connected to the base (3) combined with a longitudinal displacement damper (41) settled in the slide (4).

12. A modular machine according to the previous claim, in which the longitudinal displacement damper is chosen from a gas cylinder (41), an electric cylinder, a spring damper and a counterweight.

13. A modular machine according to the previous claim in which, in the low position of the support (5), the stop (9a) is held by locking means (9f) active during a cooking time triggered by a presence sensor (9e) and duration defined by the processing and control unit according to the cooking parameters.

14. A modular machine according to the previous claim, in which the locking means are selected from a magnetically triggered suction cup (9f), an electrically controlled locking / unlocking latch and a programmable closing / opening hatch.

15. A modular machine according to any of the preceding claims, in which the male (30) and female (20) moulds have a curved shaped cross-section incorporating at least one variation in curvature and each male mould (30) has at least one groove (36) extending in a section plane, the groove (36) having at least one disruption zone (36i) in a zone of maximum curvature.

16. A modular machine according to the previous claim, in which the curved cross-section shape of the male and female moulds is chosen from an ovoid, oblong and elliptical shape.

17. A modular machine according to claim 15, in which the grooves (36) are located substantially in a central part of the male moulds (30), and extend in a section plane oriented preferably perpendicular to the axis (M'M) of these moulds (30).
